# EUROPÄISCHE PATENTANMELDUNG

(11) **EP 1 091 154 A1**
(43) Veröffentlichungstag der Anmeldung: **11.04.2001**
(21) Anmeldenummer: 99810910.2
(22) Anmeldetag: 06.10.1999
(51) Int. Cl.: F16L 5/02, F16L 41/00

(54) **Dichtungsanordnung eines durch eine Wand eines Behälters durchgeführten Rohres**

(71) Anmelder: Fafco SA, 2500 Biel (CH)
(72) Erfinder: Kimborn, Gunnar, 2514 Ligerz (CH)
(74) Vertreter: BOVARD AG - Patentanwälte

(57) **Zusammenfassung**

Bei einem Behälter, durch dessen Wand (1) ein Rohr für die Entnahme oder Zuführung einer Flüssigkeit durchgeführt ist, und welche Wand aus einem Blech (2) besteht, die innenseitig mit einer Isolationsschicht (4) versehen ist und mit einer Matte (5) vollständig ausgekleidet ist, ist eine Dichtungsanordnung vorgesehen. Diese zeichnet sich dadurch aus, dass die Matte (5) im Bereich dieser Öffnung (6) derart ausgestaltet ist, dass ein rohrförmiger Teil (11) gebildet ist, der durch diese Öffnung (6) hindurchragt und aussenseitig an der Wand (1) des Behälters mit einem Flanschabschluss (12) versehen ist. Dieser Flanschabschluss (12) ist an der Wand (1) des Behälters abgestützt und über einen Flansch (14) eines Anschlussstückes (15) mittels Schrauben (16) gegen die Wand (1) pressbar. Dadurch wird eine Dichtungsanordnung erreicht, bei welcher eine gegebenenfalls auftretende Leckage von aussen sichtbar wäre.

## Beschreibung

Die vorliegende Erfindung bezieht sich auf eine Dichtungsanordnung eines durch eine Wand eines Behälters durchgeführten Rohres gemäss dem Oberbegriff des Patentanspruchs 1.

Insbesondere bei Eisspeichern ist es erforderlich, Rohre durch die Wand des Behälters hindurch zu führen und bezüglich der Wand abzudichten. Mit diesen Rohren wird aus einem Rohrnetz, das sich über den Boden des Behälters erstreckt, grossflächig Eiswasser entnommen und beispielsweise einem Wärmetauscher zugeführt. Diese Behälter sind isoliert und innenseitig mit vorzugsweise aus Gummi bestehenden Matten, durch welche ein Behälter gebildet wird, vollständig ausgekleidet.

Um eine wirksame Dichtung eines durch eine derartige Wand hindurch geführten Rohres zu erreichen, muss das Rohr bezüglich dieser Matte abgedichtet sein. Dies kann beispielsweise dadurch erfolgen, dass auf das Rohr ein Flansch aufgeschoben wird, der mit dem Rohr fest verbunden ist, beispielsweise verschweisst. Die Matte kann dann über einen weiteren Flansch gegen diesen Flansch verspannt werden, so dass dieser Rohrdurchgang durch die Behälterwand abgedichtet ist. Da zwischen dem Blech dieser Behälterwand und der Matte eine Isolationsschicht angebracht ist, könnte gegebenenfalls eine Leckage dieser Dichtung von aussen nicht festgestellt werden.

Die Aufgabe der vorliegenden Erfindung besteht nun darin, eine Dichtungsanordnung eines durch eine Wand eines Behälters durchgeführten Rohres zu schaffen, welche eine optimale Abdichtung gewährleistet und bei welcher eine gegebenenfalls auftretende Leckage von ausserhalb des Behälters erkennbar ist.

Erfindungsgemäss erfolgt die Lösung dieser Aufgabe durch die im Patentanspruch 1 aufgeführten Merkmale.

Da die Dichtungsstelle sich an der Aussenseite der Behälterwand befindet, kann dadurch in optimaler Weise eine gegebenenfalls auftretende Leckage durch eine Sichtkontrolle festgestellt werden.

In vorteilhafter Weise ist innerhalb des rohrförmigen Teils der Matte ein Rohrteil geführt, welcher innenseitig des Behälters über die Matte vorsteht und aussenseitig mit dem Flansch verbunden ist, mit welchem der Flanschabschluss der Matte gegen die Wand pressbar und somit abgedichtet ist, wodurch optimale Anschlussmöglichkeiten für innenseitige und aussenseitige Anschlussrohre gegeben sind.

In vorteilhafter Weise sind am Flansch Mittel vorgesehen für die Aufnahme von Spannmitteln eines Anschlussflansches einer Anschlussleitung, was eine einfache Verbindung gewährleistet. Zur Abdichtung dieser Verbindungsstelle kann in bekannter Weise zwischen den Anschlussflansch der Anschlussleitung und dem Flansch des Anschlussstückes ein Dichtungselement eingelegt werden.

Eine weitere vorteilhafte Ausgestaltung der Erfindung besteht darin, dass in die Öffnung ein Rohrstück eingesetzt ist, das mit einem Flanschteil versehen ist, welcher aussenseitig an der Wand des Behälters befestigt ist, durch welches Rohrstück der rohrförmige Teil geführt ist, und der Flanschabschluss auf diesem Flanschteil abgestützt ist. Hierdurch wird in optimaler Weise der rohrförmige Teil im Bereich der Öffnung geführt und abgestützt, und zwischen Flansch und Flanschteil eine optimale Dichtung erreicht.

In vorteilhafter Weise ist zwischen dem Flanschteil und der Wand des Behälters ein Isolationsflansch eingesetzt. Dadurch wird vermieden, dass zwischen Rohrstück, Flanschteil und Blech der Behälterwand eine Kältebrücke gebildet wird.

Dieses wird in vorteilhafter Weise dadurch unterstützt, dass zwischen der Wand des Behälters und dem Rohrstück ein Luftspalt freigehalten wird.

In vorteilhafter Weise ist die Matte, der rohrförmige Teil und der Flanschabschluss aus Gummi gebildet, wobei die Verbindung der Matte mit dem rohrförmigen Teil und die Verbindung des rohrförmigen Teils mit dem Flanschabschluss durch Vulkanisation erreicht werden kann. Dadurch wird die Herstellung der Ausgestaltung dieser Teile in einfacher Weise möglich, die Dichtheit ist gewährleistet.

Eine weitere vorteilhafte Ausgestaltung der Erfindung besteht darin, dass der Rohrteil an seinem in den Behälter hineinragenden Ende mit einer Manschette versehen ist, mittels welcher er mit einem Sammelrohr, das im Behälter vorgesehen ist und über welches die Flüssigkeit aus dem Behälter entnehmbar ist, in einfacher Weise verbindbar ist.

Eine Ausführungsform einer erfindungsgemässen Dichtungsanordnung eines durch eine Wand eines Behälters durchgeführten Rohres wird nachfolgend anhand der beiliegenden Zeichnung beispielhaft näher erläutert.
Es zeigt
Fig. 1 einen Querschnitt durch die Wand eines Behälters mit einer erfindungsgemässen Dichtungsanordnung; und
Fig. 2 eine Schnittdarstellung entlang Linie II-II der erfindungsgemässen Dichtungsanordnung gemäss Fig. 1.

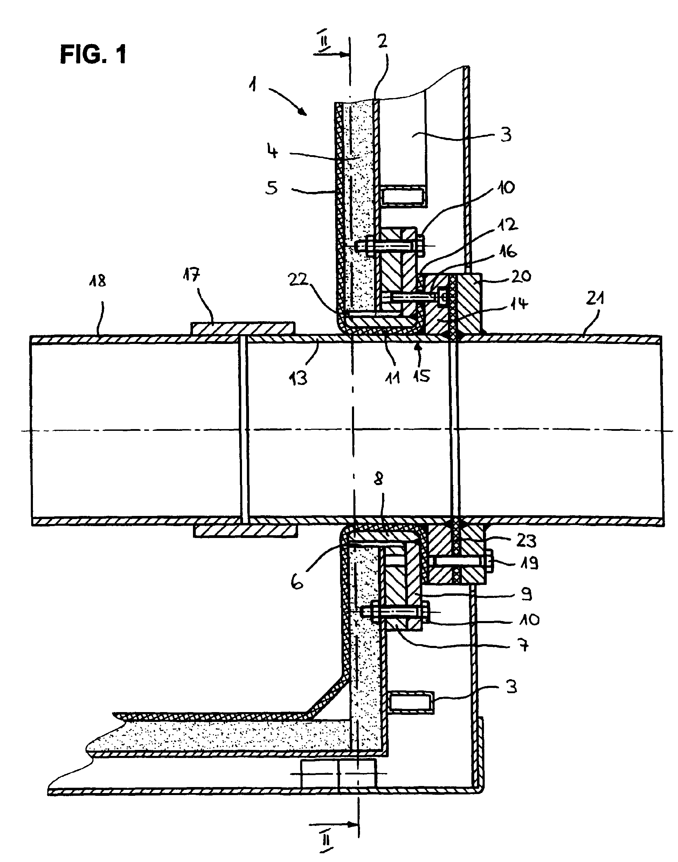

Wie aus Fig. 1 ersichtlich ist, in welcher im Schnitt der untere Bereich eines Behälters dargestellt ist, besteht die Wand 1 dieses Behälters aus einem Blech 2, das aussenseitig in bekannter Weise mit einem Fachwerk aus Profilen 3 verstärkt ist. Die Innenseite des Bleches 2 ist mit einer Isolationsschicht 4 versehen, wobei diese beispielsweise aus Styrodurplatten bestehen kann. Auf diese Isolationsschicht 4 zu liegen kommt eine Matte 5, die beispielsweise aus Gummi besteht, wobei diese Matte 5 Bestandteil ist eines aus derartigen Matten zusammengesetzten wannenförmigen Gebildes, das die Innenseite des Behälters vollständig abdeckt.

Derartige Behälter werden beispielsweise als Eisspeicher verwendet, aus welchen Kälte entnommen werden kann, beispielsweise zum Kühlen von Gebäuden oder Hallen. Hierzu ist es erforderlich, dass das sich im Eisspeicher befindliche Eiswasser im Bereich des Bodens des Behälters durch ein entsprechend ausgelegtes Rohrleitungsnetz mit darin angebrachten Einlassöffnungen entnommen wird, und aus dem Behälter herausgeführt werden kann.

Hierzu ist, wie aus Fig. 1 ersichtlich ist, in die Wand 1 des Behälters eine Öffnung 6 eingelassen, welche die Isolationsschicht 4 und das Blech 2 durchdringt. Die Öffnung 6 umgebend ist aussenseitig am Behälter auf das Blech 2 ein Isolationsflansch 7 aufgesetzt, der aus einem wärmedämmenden Material besteht.

In die Öffnung 6 ist ein Rohrstück 8 eingesetzt, welches aussenseitig mit einem Flanschteil 9 ausgestattet ist. Dieser Flanschteil 9 kommt auf den Isolationsflansch 7 zu liegen, und ist mittels Schrauben 10 zusammen mit diesem am Blech 2 befestigt.

Die Matte 5 ist im Bereich der Öffnung 6 mit einem Durchbruch ausgestattet, welcher mit einem rohrförmigen Teil 11 versehen ist, welcher innerhalb des Rohrstückes 8 durch die Öffnung 6 hindurchgeführt ist und an diesem Rohrstück 8 anliegt. Dieser rohrförmige Teil 11 ist aus dem gleichen Material wie die Matte 5 gebildet, beispielsweise Gummi, und kann mit der Matte 5 durch Vulkanisation verbunden sein. An diesem rohrförmigen Teil 11 ist ein Flanschabschluss 12 befestigt, der ebenfalls aus dem selben Material besteht und der ebenfalls durch Vulkanisation am rohrförmigen Teil 11 befestigt ist. Dieser Flanschabschluss 12 kommt auf den Flanschteil 9 zu liegen. Selbstverständlich ist es auch denkbar, anstelle von Gummi für die Matten 5, den rohrförmigen Teil 11 und den Flanschabschluss 12 aus einem anderen geeigneten Material herzustellen, abhängig auch vom Verwendungszweck.

Durch diesen rohrförmigen Teil 11 hindurchgeführt ist ein Rohrteil 13, der innenseitig über die Matte 5 vorsteht und aussenseitig mit einem Flansch 14 versehen ist. Der Rohrteil 13 und der Flansch 14 bilden zusammen das Anschlussstück 15. Der Flansch 14 kommt auf den Flanschabschluss 12 zu liegen, und ist mittels Schrauben 16 am Flanschteil 9 befestigt. Mittels dieser Schrauben 16 wird der Flansch 14 gegen den Flanschteil 9 verspannt, wodurch der dazwischenliegende Flanschabschluss 12, der in der vorliegenden Ausführungsform aus Gummi besteht, zusammengepresst wird und als Dichtung wirkt.

Auf dem inneren Endbereich des Rohrteils 13 kann beispielsweise eine Manschette 17 aufgesetzt sein, mittels welcher der Rohrteil 13 mit einem Sammelrohr 18 verbunden werden kann, welches, wie vorgängig angeführt worden ist, seinerseits mit dem Leitungsnetz zur Entnahme des Eiswassers verbunden ist.

Der aussenliegende Flansch 14 des Anschlussstückes 15 ist mit weiteren Gewindelöchern versehen, in welche Schrauben 19 eingeschraubt werden können. Mit diesen Schrauben 19 kann eine mit einem Anschlussflansch 20 versehene Anschlussleitung 21 befestigt werden, wobei zwischen diesem Anschlussflansch 20 und dem Flansch 14 in bekannter Weise ein Dichtungselement 23 eingesetzt werden kann.

Mit dieser erfindungsgemässen Dichtungsanordnung kann ein durch die Wand 1 eines Behälters durchgeführtes Rohr in optimaler Weise abgedichtet werden. Eine gegebenenfalls auftretende Leckage kann von aussen durch Sichtkontrolle festgestellt werden. Mit dieser Dichtungsanordnung wird auch erreicht, dass praktisch keine Kältebrücke auf das Blech 2 vom Innern des Behälters gebildet wird, insbesondere weil zwischen dem Rohrstück 8 und dem Blech 2 im Bereich der Öffnung 6 ein Luftspalt 22 vorgesehen ist.

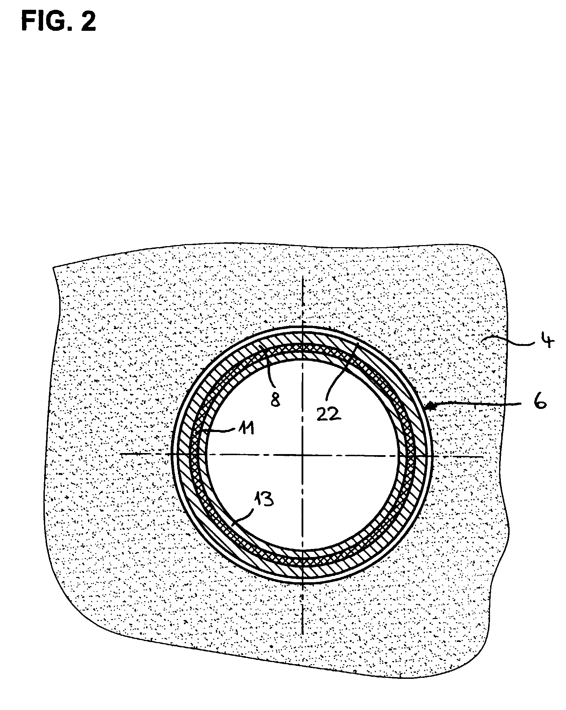

Aus Fig. 2 ist ersichtlich, dass der rohrförmige Teil 11, der im vorliegenden Ausführungsbeispiel aus Gummi besteht, zwischen dem innenliegenden Rohrteil 13 und dem aussenliegenden Rohrstück 8 angeordnet ist. Im vorliegenden Ausführungsbeispiel haben alle diese Teile einen kreisringförmigen Querschnitt. Selbstverständlich ist es auch denkbar, diese Teile mit einer anderen Querschnittsform auszugestalten, beispielsweise viereckig, mehreckig oder oval. Des weiteren ist aus Fig. 2 auch der Luftspalt 22 sichtbar, der das Rohrstück 8 umgibt.

Alle flanschartigen Elemente können eine kreisringförmige Form haben. Sie können aber auch eine andere Aussenform haben, beispielsweise viereckig, vieleckig oder oval.

Das vorliegende Ausführungsbeispiel der erfindungsgemässen Dichtungsanordnung ist für einen Eisspeicher beschrieben worden. Selbstverständlich ist eine derartige Dichtungsanordnung auch denkbar für irgend welche andere Art von Behältern, die innenseitig mit einer aus Matten bestehenden wannenförmigen Auskleidung versehen sind, aus denen durch die Wand ein Rohr zur Entnahme oder zum Einfüllen einer Flüssigkeit in den Behälter geführt ist, und das abgedichtet werden muss.

## Patentansprüche

1. Dichtungsanordnung eines durch eine Wand (1) eines Behälters durchgeführten Rohres, in welchem Behälter innenseitig eine Flüssigkeit enthalten ist, insbesondere eines Eisspeichers mit Eiswasser, welche Wand (1) aus einem mit Profilen (3) verstärkten Blech (2) gebildet ist, auf welches Blech (2) innenseitig eine Isolationsschicht (4) aufgesetzt ist und welche Isolationsschicht (4) durch eine aus einem dichtenden, elastischen Material bestehenden Matte (5) vollständig ausgekleidet ist, dadurch gekennzeichnet, dass das Blech (2) und die Isolationsschicht (4) eine durchgehende Öffnung (6) aufweisen, und dass die Matte (5) im Bereich dieser Öffnung (6) derart ausgestaltet ist, dass ein rohrförmiger Teil (11) gebildet ist, der durch diese Öffnung (6) hindurchragt und aussenseitig an der Wand (1) des Behälters mit einem Flanschabschluss (12) versehen ist, der an der Wand (1) des Behälters abgestützt ist und über einen Flansch (14) eines Anschlussstückes (15) mittels Spannmitteln (16) gegen die Wand (1) pressbar ist.

2. Dichtungsanordnung nach Anspruch 1, dadurch gekennzeichnet, dass das Anschlussstück (15) aus einem Rohrteil (13) besteht, welcher innerhalb des rohrförmigen Teils (11) der Matte (5) durch die Öffnung (6) geführt ist, innenseitig über die Matte (5) vorsteht und aussenseitig mit dem Flansch (14) verbunden ist, mit welchem der Flanschabschluss (12) gegen die Wand (1) pressbar ist.

3. Dichtungsanordnung nach Anspruch 2, dadurch gekennzeichnet, dass am Flansch (14) Mittel vorgesehen sind für die Aufnahme von Spannmitteln (19) eines Anschlussflansches (20) einer Anschlussleitung (21).

4. Dichtungsanordnung nach Anspruch 3, dadurch gekennzeichnet, dass zwischen dem Anschlussflansch (20) der Anschlussleitung (21) und dem Flansch (14) des Anschlussstückes (15) ein Dichtungselement (23) eingelegt ist.

5. Dichtungsanordnung nach einem der Ansprüche 1 bis 4, dadurch gekennzeichnet, dass in die Öffnung (6) ein Rohrstück (8) eingesetzt ist, das mit einem Flanschteil (9) versehen ist, welcher aussenseitig an der Wand (1) des Behälters befestigt ist, durch welches Rohrstück (8) der rohrförmige Teil (11) geführt ist, und der Flanschabschluss (12) auf diesem Flanschteil (9) abgestützt ist.

6. Dichtungsanordnung nach Anspruch 5, dadurch gekennzeichnet, dass zwischen dem Flanschteil (9) und der Wand (1) des Behälters ein Isolationsflansch (7) eingesetzt ist.

7. Dichtungsanordnung nach Anspruch 6, dadurch gekennzeichnet, dass zwischen der Wand (1) des Behälters und dem Rohrstück (8) ein Luftspalt (22) freigehalten ist.

8. Dichtungsanordnung nach einem der Ansprüche 1 bis 7, dadurch gekennzeichnet, dass die Matte (5), der rohrförmige Teil (11) und der Flanschabschluss (12) aus Gummi gebildet sind und dass die Verbindung der Matte (5) mit dem rohrförmigen Teil (11) und die Verbindung des rohrförmigen Teils (11) mit dem Flanschabschluss (12) durch Vulkanisation gebildet ist.

9. Dichtungsanordnung nach einem der Ansprüche 2 bis 8, dadurch gekennzeichnet, dass der Rohrteil (13) an seinem in den Behälter hineinragenden Ende mit einer Manschette (17) versehen ist, mittels welcher er mit einem Sammelrohr (18), das im Behälter vorgesehen ist und über welches die Flüssigkeit aus dem Behälter entnehmbar ist, verbindbar ist.
